# EUROPEAN PATENT APPLICATION

(11) **EP 1 747 877 A1**
(43) Date of publication of application: **31.01.2007**
(21) Application number: 06116484.4
(22) Date of filing: 30.06.2006
(51) Int. Cl.: B29C 70/68, B29C 39/10

(54) **Moulded articles and methods of producing them**

(30) Priority: 26.07.2005 US 190197
(71) Applicant: Chemque, Inc., Rexdale, Ontario M9W 5X1 (CA)
(72) Inventor: BOTRIE, Alex, Ontario M5E 1T4 (CA); BUTLER, Frederick M, Ontario L6Z 2P5 (CA); RUSSELL, Bruce Stephenson, Ontario L3R 9J7 (CA)
(74) Representative: Walaski, Jan Filip

(57) **Abstract**

Molded articles and methods of producing them are provided. In certain examples, the molded article may include a substrate and a resin molded onto the substrate. In other examples, the molded article may further include indicia on or in a surface of the resin molded onto the substrate. Processes of producing the molded articles are also disclosed.

## Description

### FIELD OF THE TECHNOLOGY

Certain examples disclosed herein relate to molded articles and to methods of producing them. More particularly, certain examples disclosed herein relate to unconventional molding processes for producing molded articles comprising a resin molded onto a substrate.

### BACKGROUND

The casting of a two-component, clear polyurethane resin upon a substrate to produce a decorative emblem is known. Cast polyurethane, when cured, gives a lens effect to the surface applied as described in U.S. Pat. No. 4,100,010 and RE 33,175. These cast polyurethane resins are commonly referred to as "doming" or "lensing" resins. Doming or lensing resins are typically clear, colorless, high gloss, room temperature or elevated temperature curing, thermosetting systems developed to provide aesthetic enhancement and environmental protection to objects such as, but not limited to, paper, plastic wood & metal, labels, decals, plaques, badges, name plates, lapel pins, automotive ornamentation, and automotive dashboards to form a durable three-dimensional coating or dome.

In order for a liquid doming resin to achieve the required appearance on an object once it is cured, it preferably has a number of characteristics intrinsic to both the liquid components and the cured resin. First, the formulation should be a clear, colorless, low viscosity liquid. It should flow sufficiently to cover the entire surface to which it is applied. It should produce a coating from approximately 20 mils (0.5 mm) to 100 mils (2.5 mm) high. It should fully cure within forty-eight hours at 25 °C & 50% R.H. The curing of the coating resin formulation should not cause shrinkage, wrinkles, surface defects, curling, or other deviations from a clear, transparent, smooth, high gloss surface. It should not contain volatile solvents (less than 1%). Once cured, the coating should maintain its initial hardness and flexibility after heat and environmental aging.

Doming resins typically have an application viscosity of about 100 to 5000 cps, are generally clear and colorless, and cure to a smooth, defect free, flexible or rigid coating. In addition to protecting the substrate surface from the environment, the resins are usually transparent providing an aesthetically appealing lensing effect to the pattern, design, or scripting on or near the substrate surface over which the resins are placed.

Currently, conventional doming resins are practically applied as two-component, 100% solids, polyurethane systems, which may be room temperature cured or cured with heat. Two-component epoxy systems are sometimes used in indoor applications. However, they cannot be used outdoors or in applications where they will be exposed to a high concentration of UV light, as they will yellow. Polyurethane systems, based primarily on aliphatic diisocyanates, are used for most indoor and outdoor applications.

The current method of producing domed articles has certain drawbacks. Dome height is limited. The maximum dome height is dependent on the surface tensions of the substrate and doming resin. In most instances, the maximum obtainable dome height is 0.08" (2.0 mm) or less. Designs, inscriptions and decorations can only be provided on the substrate. It is not possible to decorate the top of the dome. The top of the dome is always a smooth, high gloss surface. Also, the cured resin can only be made in the curved shape of a dome. It is not possible to make square or other shaped edges without additional processing steps.

### SUMMARY

Certain features, aspects and examples disclosed herein are related to molded articles comprising a resin coating on a surface of a substrate. The exact nature of the molded article produced depends, at least in part, on the selected substrate and/or the selected resin.

In accordance with a first aspect, a molded article is disclosed. In certain examples, the molded article comprises a substrate that includes a resin molded onto the substrate to a desired thickness or height. The molded articles produced using the methods disclosed herein may include indicia on a surface of the resin molded onto the substrate. Additional configurations for molded articles are described herein.

In accordance with another aspect, a molded article is provided. In certain examples, the molded article comprises a substrate that includes a resin molded onto the substrate to a desired thickness or height. The molded articles produced using the methods disclosed herein may include indicia embedded (partially or fully) in the resin molded onto a substrate. Other configurations for molded articles are described herein.

In accordance with an additional aspect, a process for producing a molded article is disclosed. In certain examples, the process comprises disposing a resin in at least a portion of a mold. The process may also comprise disposing a substrate on at least a portion of the resin. In some examples, the substrate may be disposed on the resin such that the resin covers indicia on a surface of the substrate. The process may further include curing the resin in contact with the substrate to provide a molded article. In some examples, the process may also include releasing or removing the molded article from the mold. In other examples, the molded article may be separated, trimmed, cut, etc. to produce a molded article comprising a coating having a desired shape.

In accordance with another aspect, a process for producing a molded article is provided. In certain examples, the process comprises disposing a resin in at least a portion of a mold comprising indicia in the mold. The process may further include disposing a substrate on at least a portion of the resin in the mold. The process may also include curing the resin in contact with the substrate to impart the indicia in the mold to the resin and to provide a molded article. In some examples, the process may also include releasing or removing the molded article from the mold. In other examples, the article may be separated, trimmed, cut, etc. to produce an article comprising a coating having a desired shape.

In accordance with an additional aspect, a mold is provided. In certain examples, the mold may include indicia, such as shapes, text, decoration, etc. that can be imparted to the resin of the molded article. In some examples, the mold provides for controlling of the height and/or shape of a coating on a substrate. In other examples, inserts may be placed in the mold and may become disposed on or in the molded article or embedded (partially or fully) within the resin of the molded article.

In accordance with another aspect, a method of facilitating production of a molded article is disclosed. In certain examples, the method includes providing a kit comprising a film for producing a mold, a resin, and instructions for using the film and the resin. In some examples, the substrate may also be provided with the kit.

Numerous additional aspects, embodiments and features including, for example, control of resin coating height and shape, the use of different resins in a single mold cavity, imparting different visual or aesthetic effects to the molded article and the like are disclosed below.

It will be recognized by the person of ordinary skill in the art, given the benefit of this disclosure, that the molded articles and processes disclosed herein for making the molded articles provide flexible and inexpensive articles and methods for producing such articles.

### BRIEF DESCRIPTION OF THE FIGURES

Certain features, aspects and examples are described below with reference to the accompanying figures in which:

FIG. 1A is a top view and FIG. 1B is a side view of a schematic of a mold, in accordance with certain examples;

FIG. 2 is a schematic of a substrate in accordance with certain examples;

FIG. 3 is a top view of a mold suitable for use in the processes disclosed herein, in accordance with certain examples;

FIG. 4 is a top view of a substrate, in accordance with certain examples;

FIG. 5 is a perspective view of a molded article, in accordance with certain examples;

FIG. 6 is a side view of the article of FIG. 5, in accordance with certain examples;

FIG. 7A-7C are schematics showing an example of producing a molded article using a mold fixture, in accordance with certain examples;

FIG. 8A-8B are schematics showing examples of how a mold may be filled with a resin and how a substrate may be applied, in accordance with certain examples;

FIG. 9 is a cross-section of a mold comprising a lip, in accordance with certain examples;

FIG. 10A is a schematic of a mold cavity having text and FIG. 10B is an article produced using the mold cavity shown in FIG. 10A, in accordance with certain examples;

FIGS. 11A-11J are schematics of an article having different shaped protective coatings, in accordance with certain examples;

FIGS. 12A and 12B are schematics of an article comprising a first coating overlying a second coating, in accordance with certain examples;

FIGS. 13A and 13B are schematics of an article comprising a coating on a selected area of a substrate, in accordance with certain examples; and

FIG. 14 is a schematic of open top mold in contact with a substrate, in accordance with certain examples.

It will be recognized by the person of ordinary skill in the art, given the benefit of this disclosure, that the figures are not necessarily drawn to scale and that certain elements in the figures may have been enlarged, minimized, distorted or otherwise drawn in an unconventional manner to facilitate a better understanding of the novel technology provided herein. Any use of shading, dashes, hashes and the like in the figures is not intended to imply any particular material, orientation or arrangement unless otherwise clear from the context. In addition and for purposes of clarity, certain features or elements shown in a given figure may not be labeled or shown in other figures.

### DETAILED DESCRIPTION

It will be recognized by the person of ordinary skill in the art, given the benefit of this disclosure, that the molded articles and processes disclosed herein provide many features and benefits over conventional doming methods. For example, certain embodiments of the processes disclosed herein allow for ambient temperature formation of a molded article using inexpensive molds. In certain examples, the top of the molded article may be formed in the bottom of the mold. One or more surfaces of the molded article may include indicia, such as patterns, text and the like, may be high gloss, low gloss, may include additives or may include other selected features to provide a desired visual or aesthetic effect. The molded article may be one layer or multi-layered. The molded articles may be produced, for example, using a single resin or a combination of resins. Any desired or suitable coating height, or combination of heights, may also be selected. More than one coating height may be present on a single molded article. At least certain of these features are possible using the methods disclosed herein, for example, by designing desired indicia into the mold. At least certain examples of the processes disclosed herein do not suffer from the restrictions found in conventional doming processes.

As used herein, "molded article" refers to a substrate having a resin coating, such as a decorative coating, a protective coating or the like. A molded article may be an individual article, such as, for example, an individual label with a resin coating. In certain examples, the term molded article may also refer to a substrate comprising a plurality of areas with one or more of the areas having a resin coating, e.g., a sheet of labels wherein at least one of the labels has a resin coating. A molded article may be separated, trimmed, diced or cut into individual articles depending on the exact substrate selected. For example, the substrate may include one or more individual substrates.

As used herein, the terms "dispose" or "disposing" means depositing, placing, dropping, dumping, setting, or adding. For example, when a resin is disposed in a mold, the resin may be dropped in the mold, may be deposited in the mold, may be sprayed into the mold, may be added to the mold or may otherwise be put in the mold using other suitable processes. Similarly, when a substrate is disposed on a mold or a resin, the substrate may be manually placed on the mold or the resin, may be placed on the mold or the resin using automated machinery, or may otherwise be brought into contact with the mold or the resin.

As used herein, "ambient temperature" refers to the normal temperature in a surrounding environment, such as a room, and in certain examples, ambient temperature may be from about 20 °C to about 30 °C, though variations in this range are possible depending on the selected temperature for an environment.

In accordance with certain examples, the resin coating of the articles disclosed herein may provide aesthetic enhancement and/or environmental protection to the substrate. For example, the substrate may take numerous forms such as a label, a decal, a plaque, a badge, a nameplate, a lapel pin, decorative lettering and designs, decorative construction panels and tiles, automotive ornamentation (e.g., automotive emblems, racing stripes, body designs, scripting or plaques for attaching to body panels, hood, trunks, bumpers and the like), automotive dashboards, automotive bumpers or other substrates that could benefit from a decorative or protective coating. The coating may be used on wheels, wheel wells, wheel hubs and/or other components commonly used in automotive applications. It will be within the ability of the person of ordinary skill in the art, given the benefit of this disclosure, to select suitable substrates for use in producing molded articles using the processes disclosed herein.

In accordance with certain examples, the processes disclosed herein differ from injection molding. In injection molding, thermoplastic resins are heated to at least 60 °C and injected under pressure into a closed mold. The molds used are made of steel and the two halves of the mold are clamped together under pressure to prevent the injected resin from leaking out. The thermoplastic resins used are usually solid at ambient temperature and are heated until they flow before they can be injected into the mold. Because the molds used in injection molding are subjected to high temperatures and pressures, the cost of the molds for injection molding is very high.

In contrast, molds useful in certain embodiments disclosed herein may be made from inexpensive materials, may be single use or multi-use molds, may be disposable, flexible, bendable or the like. For example, the molds may comprise of materials including, but not limited to, metal, plastic, paper, cardboard and elastomeric materials such as rubber, silicone or polyurethane. Metal molds may include, for example, molds comprising steel, tin, aluminum, titanium, cast iron, brass or other selected metals. Thin metal molds may be formed with metal stamping equipment. In certain examples, the molds may include thermoplastics such as, for example, ABS, PVC, polycarbonate, polyethylene, polypropylene and polyurethane. Any material that is easily moldable may be used to produce the molded articles disclosed herein. In certain examples, flexible molds may be produced to allow for easier release from the molded article.

In accordance with certain examples, thermoforming processes such as vacuum forming, pressure forming, blow molding and the like may be used to form the mold. In certain examples, a master mold may be made, such as on a CNC machine or on an engraving machine. The master mold may be made out of any material usually used to make molds, including wood, plaster, steel, aluminum, epoxy resin, plastics and other materials that are easily tooled. The desired properties of each article may be designed into the master mold. Those reasonably skilled in the art, given the benefit of this disclosure, will be able to use such materials to produce a master mold.

In certain examples, the mold may consist of one cavity or a plurality of cavities. For example, the number of substrates on a matching substrate sheet and the design of the resin coating desired on each substrate usually determines the number of cavities present in the mold. The exact number of cavities in the mold may vary. For example, to form resin coatings onto substrate comprising a label sheet containing six labels, a six cavity mold may be used so that the resin may be disposed into all cavities at the same time and all molded articles are formed and cured in one operation.

In accordance with certain examples, a mold may be used to impart desired indicia to the resin coating of the molded article. For example, the mold may include desired indicia such as a shape, a pattern, text, an inscription, a logo, or other desired decoration, ornamentation or the like that may be imparted to the resin coating of the molded article. The molds may be made from a plastic film which may be formed from a master mold, as discussed herein, to provide a production mold. The production mold may be made by the end user using the film, e.g., in a kit comprising a film for producing the mold, or may be provided to the end user in a form suitable for immediate use. It will be within the ability of the person of ordinary skill in the art, given the benefit of this disclosure, to select suitable materials to make molds for use in the processes disclosed herein.

In accordance with certain examples, inserts or the like may be used in conjunction with the mold to impart desired indicia within the resin coating of the molded article. An insert may be placed within the resin (partially or fully), typically after the resin is disposed into a mold cavity, and the insert can remain in the molded article or may be removed from the molded article to leave desired indicia within the resin coating of the molded article. The insert may include indicia, such as a shape, a pattern, text, an inscription, a logo, or other desired decoration, ornamentation or the like that may be imparted to the resin coating of the molded article. The person of ordinary skill in the art, given the benefit of this disclosure, will be able to produce molded articles comprising inserts using the methods disclosed herein.

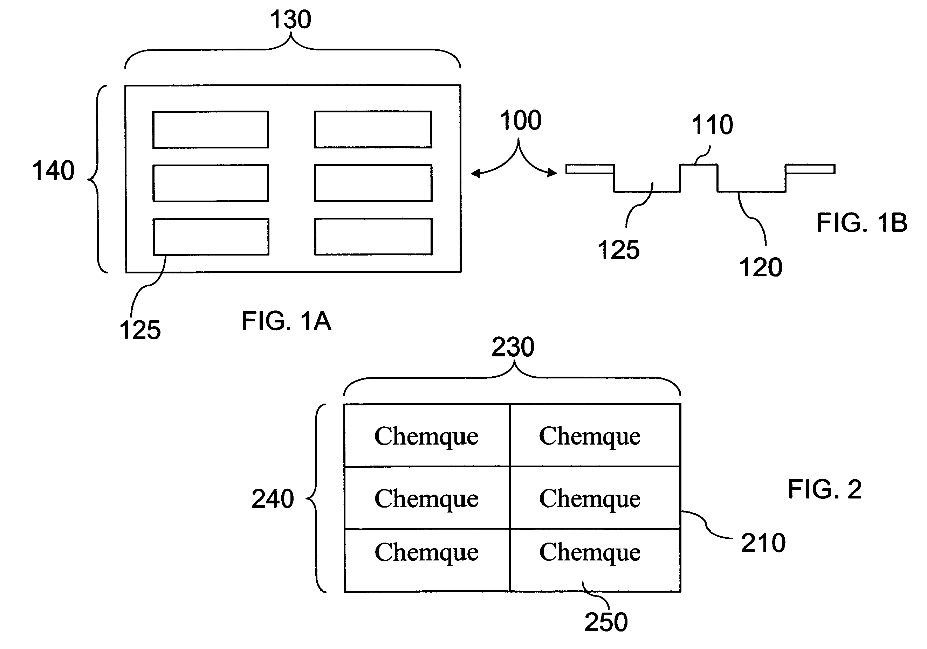

In accordance with certain examples, the molds may be very thin, e.g., the walls of the cavities of mold may be from about 0.01 mm to about 25 mm thick, more particularly about 0.1 mm thick to about 10 mm thick, as the cure temperature used may be around ambient temperature. Molds for use in the processes described herein may take any selected shape, depth, pattern, configuration or the like. In some examples, the mold is configured to have a length and width dimensions similar to those of a substrate such that a protective coating may be applied to the substrate. For example and referring to FIGS. 1A and 1B, a mold 100 comprises a top surface 110 and a bottom surface 120. The mold has a length 130 and a width 140, each of which may be similar to the length 230 and width 240, respectively of a substrate 210 (see FIG. 2), such as a label with a pressure sensitive adhesive on the back that is attached to release paper. In some examples, the mold comprises a cavity 125, which may be configured to receive a resin. The substrate may include, for example, one or more labels, such as label 250. The cavity 125 may be any suitable depth, shape or configuration and, in some examples, a cross-sectional shape of the cavity is about the same shape as the substrate. In some examples, the cavity may be about 1 mil to about 500 mils deep, more particularly about 20 mils to about 200 mils deep, e.g., about 40-80 mils deep. The depth of the cavity is typically selected based on the desired thickness of the resin coating of the molded article. Suitable depths for a mold cavity will be readily selected by the person of ordinary skill in the art, given the benefit of this disclosure.

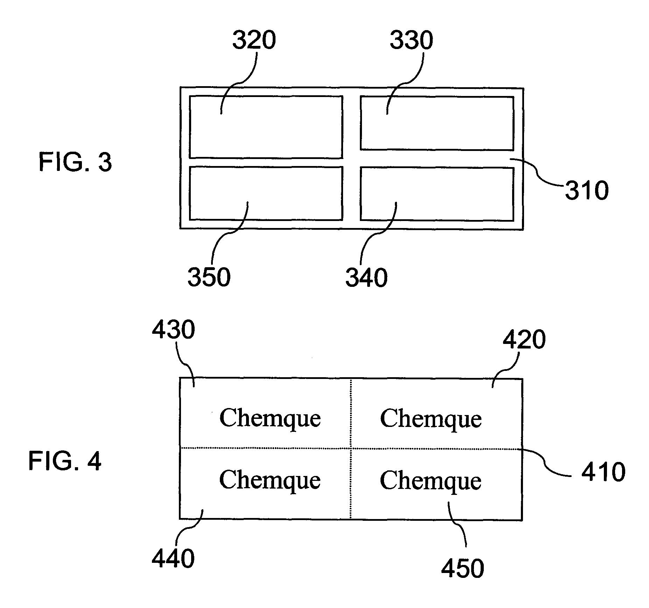

In other examples, the mold may comprise a plurality of cavities each of which may be configured to receive a resin. In some examples, each of the cavities of the mold may have the same depth, whereas in other examples the mold may include cavities having different depths. In certain examples, the mold may include a suitable number of cavities such that as a substrate is disposed on the mold, the mold is configured to provide a resin coating to a selected area of the substrate, or, in some examples, to substantially all areas of the substrate. For example, and referring to FIG. 3, a top view of a mold 310 is shown with four cavities 320, 330, 340 and 350. Each of the cavities 320, 330, 340 and 350 may receive a resin, such as the illustrative resins disclosed herein, or only selected cavities may receive a resin. After disposition of the resin in the cavities of the mold 310, a substrate 410 (see FIG. 4) may be disposed on a top surface of the mold. In this example, the substrate 410, which is shown as a sheet of labels in FIG. 4, may be arbitrarily divided into four quadrants 420, 430, 440 and 450. The substrate 410 may be disposed on the mold 310 in a suitable manner such that quadrant 440 overlies cavity 320, quadrant 450 overlies cavity 330, quadrant 430 overlies cavity 350 and quadrant 420 overlies cavity 340.

In accordance with certain examples, a production mold for use in producing the molded articles disclosed herein may be formed from a master mold on vacuum-forming or pressure-forming equipment. In a preferred embodiment, flexible or rigid thermoplastic films, such as polyethylene and polypropylene and composites of polyethylene and polypropylene may be used to make production molds. These materials are inexpensive and are easily molded with thermoforming equipment. In addition, these materials do not substantially stick to most resins and allow each mold to be used numerous times. For example, materials may be placed into a master mold and after setting, a production mold may be released from the master mold and used to produce the articles, as described herein. Other thermoplastic films may also be used.

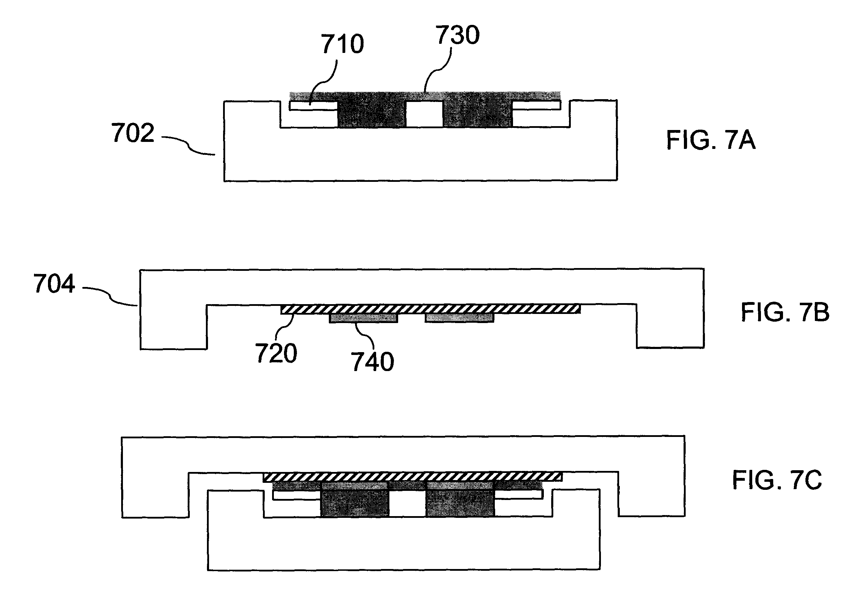

In accordance with certain examples, a mold fixture may be used in the processes disclosed herein. For example and referring to FIG. 7A, a production mold 710 may be placed into the bottom 702 of a mold fixture. A substrate 720 comprising indicia, such as label 740, may be placed in the top 704 of the mold fixture (FIG. 7B) and may be held in place mechanically or with an adhesive, tape or other device or material that may temporarily hold the substrate in the top of the mold fixture. The top 704 and bottom 702 are shown in the figures as separated, though they may be connected through a hinge or other suitable device. The substrate 720, may include a label or decal, such as label 740 shown in FIG. 7B. A resin 730 may be dispensed into a selected number of cavities in the mold 710 as shown in FIG. 7A. The mold fixture may then be closed, aligning each mold cavity with a selected area on the substrate 720 (see FIG. 7C). The use of a mold fixture provides significant advantages including, for example, precise formation of molded articles, efficient production of the molded articles and automated formation of the molded articles. It will be within the ability of the person of ordinary skill in the art, given the benefit of this disclosure, to produce molded articles using a mold fixture.

In accordance with certain examples, a molded article may be produced by cutting or removing the bottom (or a portion thereof) of the mold. The mold may then be placed on a substrate and optionally held in place with an adhesive, e.g., a tack adhesive or the like, between the substrate and the mold. Positioning the mold onto the substrate may be facilitated with a mold fixture or may be performed manually or using other suitable methods.

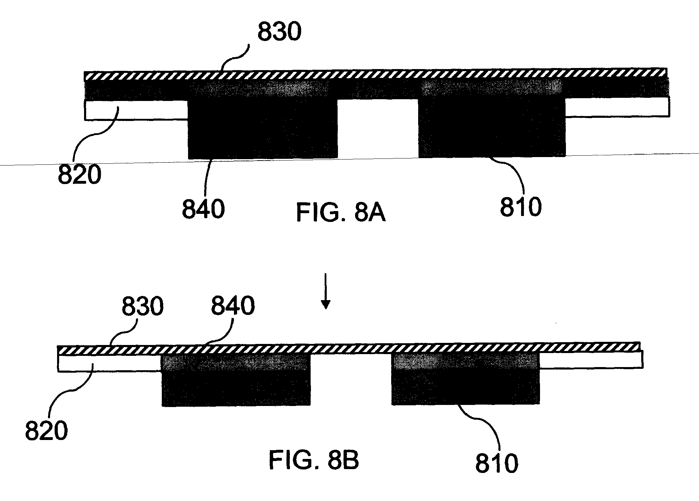

In accordance with certain examples, one method to fill the mold cavity is to fill the resin 810 above the top lip so that resin is above the lip of the mold 820 (see FIG. 8A). A substrate 830, such as a sheet of labels may be placed, lying flat and directly above and parallel to the top of the mold 820 with each mold cavity aligned with a selected area on the substrate 830. The substrate 830 may include a label or decal 840, e.g., a pressure sensitive label or decal on a release paper. The substrate 830 may then be lowered onto the mold, and may be held against the mold (FIG. 8B) until the resin cures to provide a molded article. After the resin cures, the molded article may be removed from the mold and the molded article may be cut or trimmed if desired.

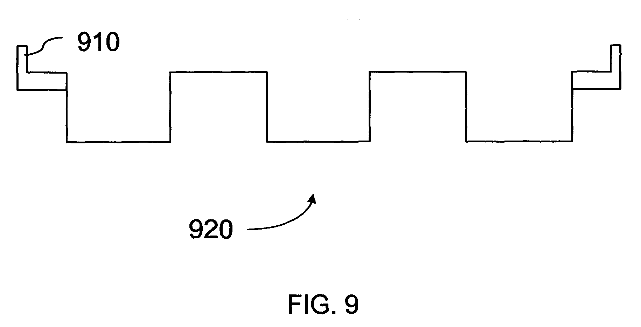

In accordance with certain examples, a mold may include a small lip 910, e.g., about 1 mm high, around the edge of a mold 920 above the mold cavity (as depicted in a cross-section shown in FIG. 9). Resin may be filled into the mold, filling the mold cavity and the lip. The resin may be cured or partially cured. The substrate may then be disposed onto the molded resin, e.g., in the case of partial curing of the resin, or may be disposed onto the molded resin and bonded to the resin with an adhesive, e.g., in the case where the resin is fully cured prior to disposition of the substrate on the resin. The molded article may be removed from the mold and optionally cut or trimmed if desired.

In accordance with certain examples, the molded article may be removed from the mold using numerous suitable methods and/or devices. This removal may be facilitated, for example, by slightly tapering the mold. It may also be desirable to use a mold release agent. The release agent may form a coating on the inside of the mold cavity or it may be added to the doming resin. It may also be integrated into the mold to reduce sticking of the mold to the resin. Many spray-on mold release agents suitable for use in injection molding applications may be used here. A suitable mold release agent that may be incorporated into the doming resin is SF-96 (G.E. Silicones). Additional devices and materials for facilitating release of the molded articles from the mold will be readily selected by the person of ordinary skill in the art, given the benefit of this disclosure.

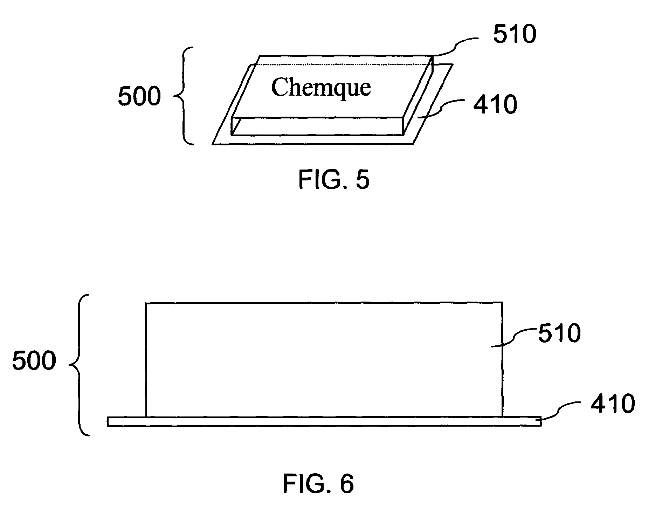

In accordance with certain examples, a quadrant of the substrate 410 is shown in perspective view (FIG. 5) and side view (FIG. 6) with a resin coating 510 overlying the quadrant of the substrate 410. As discussed herein, the resin coating 510 and substrate 410 form a molded article 500. The exact form of the molded article depends at least in part on the selected substrate. For example, the substrate may be a label, a decal, a plaque, a badge, a nameplate, a lapel pin, automotive ornamentation, an automotive dashboard or other suitable substrates that could benefit from a protective coating. The article may be separated, cut, trimmed or shaped to form a final article. In accordance with certain examples, after the molded articles are removed from the mold (or in certain instances before the molded articles are removed from the mold), the molded article may be separated and trimmed with a die cutting, laser cutting or other cutting devices, such as a Zund. The person of ordinary skill in the art, given the benefit of this disclosure, will be able to produce selected articles having desired shapes and forms using the methods disclosed herein.

In accordance with certain examples, it is also possible to permanently bond mold material (or other selected materials) onto all or part of a cured resin coating and/or cured resin. This may produce a coating with properties not obtainable with the resin alone. These properties include heat resistance, resistance to certain chemicals and electrical conductivity. Molded articles with different aesthetic effects can also be produced. These materials may be transparent, translucent or opaque. They may be flexible or rigid. Examples of materials that may be used include, but are not limited to, plastics, such as, colored and decorated films, holographic films, silicone, polyurethane, polyester, polyethylene, polypropylene and ABS. Metals and metallized films may also be used. Adhesion promoters and surface treatment may be used to promote the adhesion to surfaces that do not readily bond to the doming resin.

In accordance with certain examples, special effects may also be obtained by applying a coating to the outside of the molded article. For example, a coating can be applied onto the inner walls of the mold cavity before disposing the resin in the mold cavity. A coating may also be applied to the molded article after the article is removed from the mold. For example, brush, roller, spray, or other application techniques may apply the coatings. The coating may impart aesthetic effects such as color, metallic appearance, sparkles, etc. The coating may also provide environmental and/or chemical protection.

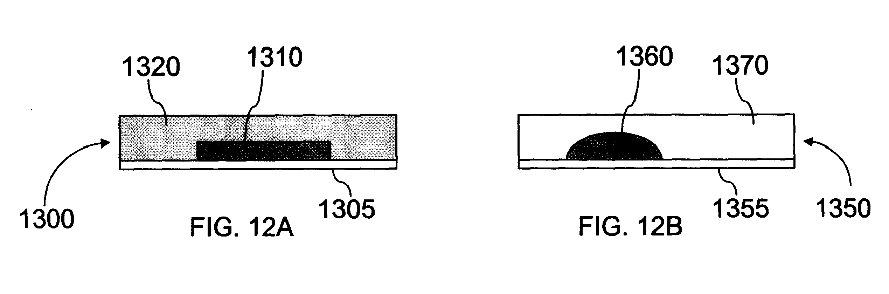

In accordance with certain examples, inserts may be placed into the resin. For example, some of the resin required to fill the mold cavity may be dispensed into the mold, and the resin may be cured. A colored film, e.g., a clear film with a design or scripting, a novelty item or other decoration, may be placed on top of the cured resin. The rest of the resin may be dispensed to fill the mold cavity. The substrate may then be placed on top of the resin and the resin cured to provide a molded article. In other examples, a layer may be molded within a larger layer. For example, a small colored resin layer may be molded inside a larger clear resin layer (FIG. 12A & 12B).

In accordance with certain examples, it is also possible to mold a resin without permanently attaching it to the substrate. In this instance, the resin itself will form the molded article. Scripting or designs may be molded into the bottom of the resin by solidifying the resin onto a decorated substrate. The substrate may then be removed, leaving a molded decoration in the bottom of the resin. The molded article may be attached to a desired device, e.g., a car, bike frame, refrigerator, etc., with an adhesive after being cured. The molded article may also be bonded to a substrate with a pressure sensitive, heat activated adhesive or other adhesive. Mechanical fasteners, e.g., screws, nails, rivets, bolts and the like, may also be attached to or cured into the resin. The resin may also be bonded to a substrate or a decorated substrate attached to a magnet.

In accordance with certain examples, the thickness of the resin in the molded article may be controlled with the use of the molds used in this process. The coating may be, for example, as low as 0.001 inches or as high as desired. The height will be dependent on the substrate being molded into a molded article and the desired effect. It will be within the ability of the person of ordinary skill in the art, given the benefit of this disclosure, to produce molded articles having a desired resin thickness.

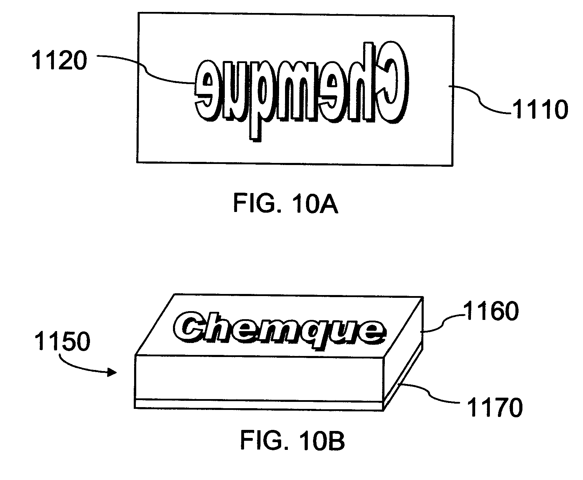

In accordance with certain examples, one or more cavities in the mold may include indicia, such as an inscription, design, shape, text or the like. For example and referring to FIG. 10A, a bottom surface 1110 of a mold cavity includes depressions in a suitable form to provide text 1120 or an inscription on the final article. The text is typically reversed in the mold such that normal text is produced in the final molded article. For example, using the mold cavity shown in FIG. 10A, a molded article 1150 may be produced (see FIG. 10B). Molded article 1150 includes a resin coating 1160, with text formed in the resin coating 1160, and a substrate 1170. In some examples, text, shapes or the like may be included on multiple surfaces of the mold cavity to provide a molded article. In examples where a mold having an inscription, design, shape, text or the like is used, the substrate 1170 that may be disposed on the resin may or may not include its own text or design. In certain examples, the substrate may be colored, mirrored or the like to alter or enhance the visual effect produced by the resin coating having an inscription, design, shape, text or the like. It will be within the ability of the person of ordinary skill in the art, given the benefit of this disclosure, to design molds having suitable text, inscription, shapes or the like in one or more surfaces of the mold.

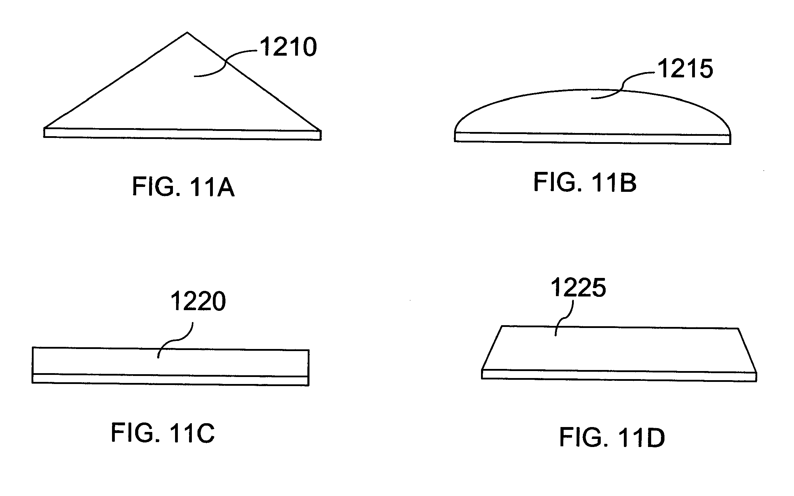

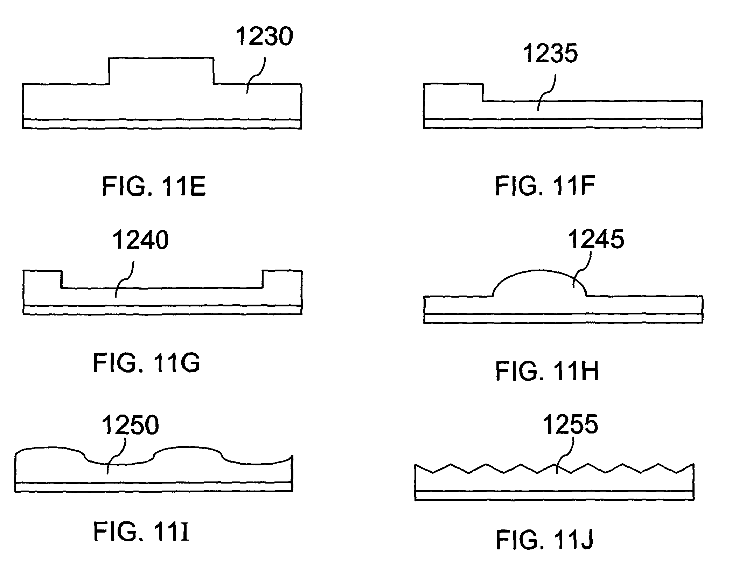

In certain examples, the shape of the resin coating may take any selected shape, such as the resin coating shapes shown in FIGS. 11A-11J. For example, a triangular shaped coating 1210 (FIG. 11A), a dome shaped coating 1215 (FIG. 11B), a rectangular shaped coating 1220 (FIG. 11 C), or a trapezoidal shaped coating 1225 (FIG. 11 D) may be present. In addition, one or more of irregular shaped coatings 1230, 1235, 1240, 1245, 1250 or 1255 (FIGS. 11E-11J) may also be present. Providing texture to the surface of the mold can also change the gloss of the molded article. The person of ordinary skill in the art, given the benefit of this disclosure, will be able to select suitable coating shapes for a molded article.

In accordance with certain examples, a resin suitable for use in the methods disclosed herein may be a single component resin or may be a multi-component resin. For example, the resin may be a one component resin, e.g., a one component UV curing acrylated system such as an acrylated epoxy resin, an acrylated polyester resin, an acrylated polyether resin and an acrylated acrylic resin. The one component resin may also be a UV curing cationic system, based on a cycloaliphatic epoxy resin or an oxetane resin. Moisture curing polyurethane, silicone and silylated resin systems may also be used. Hot melt or other thermoplastic resins may also be used. It will be within the ability of the person of ordinary skill in the art, given the benefit of this disclosure, to select additional one-component resins for use in the processes disclosed herein.

In accordance with certain examples, two component resins may be used in the processes disclosed herein. For example, two-component aliphatic polyurethane resins may be used. Typical formulations for these resins are provided in U.S. Pat. No. 4,100,010 and RE 33,175. Such two-component resins may be cured at ambient temperature without the addition of heat from an external heat source. Suitable two-component resins also may have good UV and weathering resistance and may be used, for example, for outdoor applications. Ambient temperature curing resins or resins that cure below the melting point of the mold may also be used, e.g., two-component materials such as aromatic polyurethane, epoxy, unsaturated polyester, acrylic, silicone and the like. It will be within the ability of the person of ordinary skill in the art, given the benefit of this disclosure, to select additional two-component resins for use in the processes disclosed herein.

In accordance with certain examples, resins suitable for use to produce articles typically are low viscosity liquids at ambient temperatures. The resins may be dispensed into a mold and solidified at ambient temperatures. In some examples, heating of the resin or the mold is not necessary, whereas in other examples, heating may be used to accelerate the cure or to reduce the viscosity of the resin so that it will flow into the corners and small cavities of the mold. The temperature is preferably hot enough to decrease the viscosity of the resin but not so hot that melting of the mold may occur. In certain examples, the viscosity of the resin may be from about 10 cps to about 50,000 cps, more particularly about 50 cps to 10,000 cps, e.g., about 100 to about 5,000 cps, when the resin is dispensed into a mold at ambient temperatures and pressures.

In certain examples, resins suitable for use in conventional doming processes may be used to produce the articles described herein. For example, polyurethane systems, based primarily on aliphatic diisocyanates, may be used for most indoor and outdoor applications. Other polymers may also be used. These include, for example, aromatic diisocyanate based polyurethane systems, hot-melt polymers, and polymers cured by actinic radiation. Other resins include acrylic, unsaturated polyester, silicone and moisture-curing polyurethane and silylated polyurethane resins. Heat-activated resins such as blocked polyurethane resins may also be used.

In accordance with certain examples, the resin coating may include one resin or two or more different resins. For example, resins with different indices of refraction, such as epoxy resin and unsaturated polyester resin, may be used to increase the optical effect, e.g., magnifying effect, of the resin coating. Different colored resins may also be used.

In accordance with certain examples, the resin may include additives, dyes, colorants, fillers, particles, etc. to impart desired characteristics to the molded article. Such additives, dyes, colorants, fillers, particles, etc. may be added to the mold prior to disposition of the resin in the mold, or may be added directly to the resin, prior to, during or subsequent to disposition of the resin in the mold. For example, the resin may include a dye, which may be added to the resin as the resin is disposed into the mold. Illustrative additives include silica, carbon black, organic or inorganic dyes, materials to provide texture, metal particles (e.g., silver, gold, copper, platinum, aluminum, etc.) Other additives such as flow agents, viscosity modifiers, foam control agents, plasticizing agents, moisture scavengers, adhesion promoters, temperature stabilizers, and/or ultraviolet radiation stabilizers may be added. Flow agents typically include polyether modified organosilicones, such as Silwet^{®} L-7602, CoatOSil^{®} 3500 surfactant (GE-OSi), DC-57 Additive (Dow Coming), or Tego^{®} Wet 260 additive (Degussa); viscosity increasing agents may include surface treated silica, while viscosity reducing agents may include plasticizers such as dioctyl phthalate, diisononyl phthalate, and diisodecyl phthalate. Moisture scavengers such as molecular sieves, oxazolidines and/or vinyl trimethoxysilane are often employed. Mold release agents may be included, such as SF-96 (G.E. Silicone). Adhesion promoters may include organosilanes such as aminopropyltrimethoxysilane, aminopropyl-triethoxysilane, aminoethylaminopropyltrimethoxysilane, N-phenyl aminopropyltrimethoxysilane, glycidoxypropyltrimethoxysilane, (epoxy-cyclohexyl)ethyltrimethoxysilane; phosphate, titanate or chromium esters, and zinc compounds may also be included. Examples of temperature stabilizers include the Irganox^{®} brands from Ciba specialty chemicals, e.g., Irganox 1010 Antioxidant. Light stabilizers of the hydroxyphenyl-s-triazine family may be suitable for use in the high build, clear and pigmented doming resins. An illustrative light stabilizer is, for example, Tinuvin 400 from Ciba Specialty Chemicals. However, other classes of UV absorbers can also be used, including the hydroxyphenyl-benzotriazoles, hydroxyl-benzophenones and oxalic anilides.

In accordance with certain examples, the curing of the resin can be accelerated with heat, humidity or actinic radiation. In the case of a hot-melt resin, the molded article maybe cooled to accelerate the resin solidifying process.

In accordance with certain examples, the resin composition may also include an effective amount of colorizing additives to provide color effect to the cured formulation. Suitable colorizing additives include, but are not limited to, inorganic pigments such as those based on titanium dioxide, iron oxides, lead oxide, calcium carbonate, cobalt alumina hydrate, barium sulfate, zinc oxide, strontium, chrome, copper, or cobalt; or organic colorants such as the phthalocyanines, azos, perylenes, quinacridones, indanthrones, and pyrroles.

In accordance with certain examples, the exact article produced using the methods disclosed herein typically depends, at least in part, on the selected substrate. For example, a substrate may be selected to produce a decorative emblem, a nametag, a label, a decal and the like which have a transparent, or colored, weather resistant protective coating over a decorative surface. In certain examples, a plurality of articles are simultaneously produced, separated and cut into individual articles subsequent to curing.

In accordance with certain examples, a surface of the substrate, such as for example, a back or bottom surface of the substrate (e.g., the surface opposite to the surface in contact with the resin) may contain an adhesive. The adhesive may be a pressure sensitive adhesive, a heat-activated adhesive or other suitable adhesive. The substrate may also have a magnetic backing other suitable attaching device that will allow permanent or temporary attachment of the article to a desired device or apparatus. Additional suitable devices to permit attachment of the articles disclosed herein to a surface will be readily selected by the person of ordinary skill in the art, given the benefit of this disclosure.

In accordance with certain examples, an intermediate layer may be disposed between the resin and the substrate. The intermediate layer may be any suitable material to impart a desired property or characteristic to the article. For example, the intermediate layer may be a colored layer, a mirrored layer or other suitable layers that could alter the visual appearance of the article. In some examples, the intermediate layer may be an adhesive to aid in attachment of the substrate to the resin. Additional materials for use in intermediate layers will be readily selected by the person of ordinary skill in the art, given the benefit of this disclosure.

In accordance with certain examples, the substrate may be a multi-layer substrate or a laminate, which may be formed prior to disposition on the resin or may be formed by subsequent disposition of individual layers onto each other after a first layer is disposed on the resin. The person of ordinary skill in the art, given the benefit of this disclosure, will be able to select suitable methods of using and/or forming multi-layer substrates in the processes disclosed herein.

In accordance with certain examples, an article may include a first coating that overlies or surrounds, either fully or partially, a second coating. For example, and referring to FIG. 12A, a molded article 1300 may include a substrate 1305 with a first coating 1310 which is surrounded by a second coating 1320. The shape of each of the first coating and the second coating may vary. For example, first coating 1310 is shown as rectangular in FIG. 12A and first coating 1360 on a substrate 1355 of a molded article 1350 is shown as dome shaped in FIG. 12B. The shape of the second coating may also vary even though the shapes of second coating 1320 and second coating 1370 are shown as rectangular in FIGS. 12A and 12B. In addition, the properties, e.g., color, lens effect, etc., of the first and second coating may be the same or may be different. For example, the first coating may be green and the second coating may be yellow, such that together the two coatings would impart a blue color.

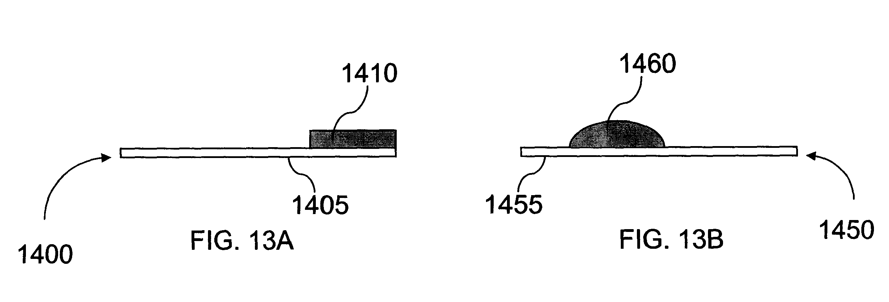

In accordance with certain examples, a molded article may include a coating on a selected portion of a substrate. For example and referring to FIG. 13A, a molded article 1400 comprises a substrate 1405 with a coating 1410 molded onto a selected area of the substrate 1405. In this example, the coating 1410 is rectangular in shape, though other shapes are possible. For example and referring to FIG. 13B, a molded article 1450 comprises a substrate 1455 with a coating 1460 that has a dome shape. Additional coating shapes will be readily selected by the person of ordinary skill in the art, given the benefit of this disclosure.

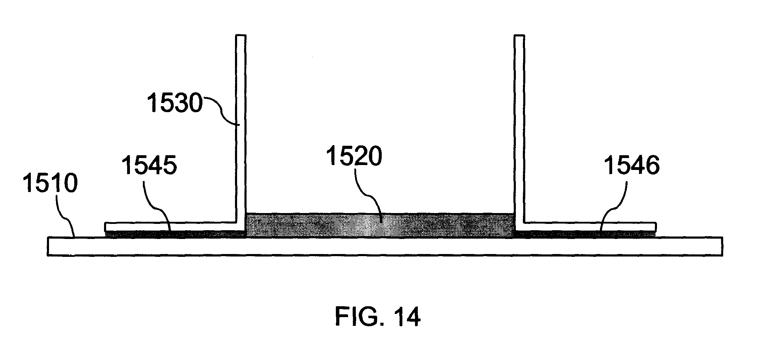

In accordance with certain examples, a mold which is open at a top surface may be used to produce a molded article. For example and referring to FIG. 14, a substrate 1510, comprises a label or decal 1520 in contact with release paper. A mold 1530 may be placed over the label 1510 and may be held in place using adhesive 1545 and 1546, such as a tacky adhesive. Other methods, such as mechanical methods may also be used to hold the mold 1530 in place. In some examples, the bottom of the mold 1530 may seal around the label or decal 1520 to be coated. Resin may be disposed directly on the label or decal 1520. While a top surface of the mold 1530 is open, the entire top need not be open. For example, the top surface of the mold 1530 may include an entry or port to allow resin to be disposed into the mold 1530. Suitable configurations for disposing resin into a mold comprising an open top surface will be readily selected by the person of ordinary skill in the art, given the benefit of this disclosure.

In accordance with certain examples, a method of facilitating production of an article is disclosed. In certain examples, the method includes providing a kit comprising a film for producing a mold, a resin and instructions for using the film and the resin. The film may be any film suitable for producing a mold, such as the illustrative films listed herein. The resin may be any of the exemplary resins disclosed herein. In some examples, the method may also include providing a substrate, whereas in other examples the user provides the substrate. The substrate may be any of the exemplary substrates disclosed herein or other substrates that will be selected by the person of ordinary skill in the art, given the benefit of this disclosure, that are suitable for use with the methods disclosed herein.

When introducing elements of the examples disclosed herein, the articles "a," "an," "the" and "said" are intended to mean that there are one or more of the elements. The terms "comprising," "including" and "having" are intended to be open ended and mean that there may be additional elements other than the listed elements. It will be recognized by the person of ordinary skill in the art, given the benefit of this disclosure, that various components of the examples can be interchanged or substituted with various components in other examples.

Although certain features, aspects, examples and embodiments have been described above, additions, substitutions, modifications, and alterations of the disclosed illustrative features, aspects, examples and embodiments will be readily recognized by the person of ordinary skill in the art, given the benefit of this disclosure.

## Claims

1. A molded article comprising:
a substrate; and
a resin molded onto the substrate.

2. The molded article of claim 1 further comprising indicia on or in the resin molded onto the substrate.

3. The molded article of claim 1 further comprising one or more of an adhesive, a tape, an additive or a magnet on a surface of the molded article.

4. The molded article of claim 1 in which the resin is one or more members selected from the group consisting of thermoset resins, thermoplastic resins, and hot-melt resins.

5. The molded article of claim 4 in which the substrate is one or more members selected from the group consisting of a label, a decal, a plaque, a badge, a name plate, a lapel pin, automotive ornamentation, an automotive dashboard, and an automotive bumper.

6. The molded article of claim 1 in which the indicia is one or more members selected from the group consisting of decoration, a pattern, an inscription, a design, a shape, text and a logo.

7. The molded article of claim 1 further comprising a mold surrounding at least a portion of the substrate or a portion of the resin.

8. The molded article of claim 7 in which the mold comprises an opening in a top surface.

9. A process comprising:
disposing a resin in at least a portion of a mold;
disposing a substrate on at least a portion of the resin; and
curing the resin in contact with the substrate to provide a molded article.

10. The process of claim 9 further comprising disposing the substrate on the resin such that the resin covers indicia on a first surface of the substrate.

11. The process of claim 9 further comprising releasing the molded article from the mold.

12. The process of claim 9 further comprising disposing one or more of an adhesive, a tape, an additive or a magnet on a surface of the molded article.

13. The process of claim 9 further comprising separating the molded article into a plurality of articles.

14. The process of claim 9 further comprising performing the disposing and curing steps at ambient temperature.

15. The process of claim 9 further comprising curing the resin in contact with the substrate to impart indicia in the mold to the resin.

16. The process of claim 15 further comprising releasing the molded article from the mold.

17. The process of claim 15 further comprising disposing one or more of an adhesive, a tape, an additive or a magnet on a surface of the molded article.

18. The process of claim 15 further comprising separating the molded article into a plurality of articles.

19. The process of claim 15 further comprising performing the disposing and curing steps at ambient temperature.

20. A method of facilitating production of an article, the method comprising:
providing a kit comprising:
a film for producing a mold;
a resin; and
instructions for using the film and the resin.
